# FASCICULE DE BREVET EUROPEEN

(11) **EP 2 387 877 B1**
(45) Date de publication et mention de la délivrance du brevet: **07.05.2014**
(21) Numéro de dépôt: 11305486.0
(22) Date de dépôt: 22.04.2011
(51) Int. Cl.: A01J 25/11

(54) **Dispositif d'égouttage d'une faisselle dans un récipient**
Abtropfvorrichtung eines Abtropfbehälters in einem Behälter
Device for draining a cheese drainer into a container

(30) Priorité: 18.05.2010 FR 1053848
(43) Date de publication de la demande: 23.11.2011
(73) Titulaire: SEB S.A., 69130 Ecully (FR)
(72) Inventeur: Astegno, Jean-Paul, 64420, Espoey (FR); Charles, Patrick, 65290, Louey (FR); Perrier, Matthieu, 26000, Valence (FR)
(74) Mandataire: Cémeli, Eric Philippe Laurent

(56) Documents cités:
- DE-A1- 2 929 641
- FR-A1- 2 267 700
- FR-A1- 2 376 803
- FR-A1- 2 423 977
- FR-A5- 2 045 236

## Description

La présente invention concerne le domaine technique des dispositifs d'égouttage comportant un récipient extérieur recevant un réceptacle intérieur perforé, dans lesquels le récipient extérieur est susceptible de supporter le réceptacle intérieur perforé dans une position basse et dans une position haute, la position haute permettant un égouttage du contenu du réceptacle intérieur perforé dans le récipient extérieur.

La présente invention concerne notamment la confection de fromage blanc, pour laquelle un égouttage du petit lait peut être souhaité.

Le document FR 2 423 977 divulgue un dispositif d'égouttage du type précité, dans lequel le réceptacle intérieur perforé présente des protubérances latérales externes susceptibles de reposer sur des organes de support du récipient extérieur lorsque le réceptacle intérieur perforé occupe la position haute. Toutefois ces protubérances latérales externes sont formées par des languettes flexibles, et le passage de la position basse à la position haute et vice-versa nécessite de déformer élastiquement lesdites languettes. L'effort d'insertion ou d'extraction nécessaire rend l'utilisation de ce dispositif peu aisé.

L'objet de la présente invention est de proposer un dispositif d'égouttage permettant des manipulations particulièrement aisées.

Cet objet est atteint avec un dispositif d'égouttage comportant un récipient extérieur recevant un réceptacle intérieur perforé, le récipient extérieur pouvant supporter le réceptacle intérieur perforé dans une position basse et dans une position haute, le réceptacle intérieur perforé présentant au moins deux protubérances latérales externes susceptibles de reposer sur des organes de support du récipient extérieur lorsque le réceptacle intérieur perforé occupe la position haute, le récipient extérieur présentant une ouverture supérieure, des renfoncements latéraux étant prévus pour loger au moins partiellement lesdites protubérances latérales externes lorsque le réceptacle intérieur perforé occupe la position basse, du fait que l'ouverture supérieure ménage à l'intérieur dudit récipient extérieur au moins deux renfoncements latéraux entre lesdits organes de support, et que les renfoncements latéraux ménagent un passage pour les protubérances latérales externes lorsque le réceptacle intérieur perforé est déplacé de la position basse dans le récipient extérieur vers l'extérieur, et vice-versa. Ces dispositions permettent de passer le réceptacle intérieur perforé de la position haute à la position basse et vice versa simplement en soulevant le réceptacle intérieur perforé au dessus du récipient extérieur, en tournant le réceptacle intérieur perforé par rapport au récipient extérieur de manière à placer les protubérances latérales externes au dessus des renfoncements latéraux ou au dessus des organes de support, et en reposant le réceptacle intérieur perforé dans le récipient extérieur. Les renfoncements latéraux débouchant dans l'ouverture supérieure permettent le retrait du réceptacle intérieur perforé et la mise en place du réceptacle intérieur perforé dans le récipient extérieur par simple déplacement du réceptacle intérieur perforé.
Selon un mode de réalisation, le réceptacle intérieur perforé occupant la position basse repose sur un fond du récipient extérieur. Cette disposition permet de limiter l'espace autour du réceptacle intérieur perforé, favorisant ainsi la rétention de petit lait dans la faisselle.
Selon une forme de réalisation, les organes de support du récipient extérieur sont formés par des protubérances latérales internes. Cette disposition permet d'optimiser l'encombrement latéral du récipient extérieur. Avantageusement alors, les protubérances latérales internes sont issues d'un bord supérieur du récipient extérieur. Cette disposition permet d'optimiser l'encombrement en hauteur du récipient extérieur.
Selon une autre forme de réalisation, les organes de support du récipient extérieur sont formés par un bord supérieur du récipient extérieur. Les renfoncements latéraux peuvent alors être formés par la paroi latérale du récipient extérieur.
Selon une forme de réalisation, le récipient extérieur et le réceptacle intérieur perforé présentent une géométrie non circulaire.

Plus particulièrement, le récipient extérieur et le réceptacle intérieur perforé peuvent présenter une géométrie polygonale.

Selon un mode de réalisation, le réceptacle intérieur perforé comporte une ou des parois latérales perforées. En alternative ou en complément, le réceptacle intérieur perforé peut comporter un fond perforé.

Selon une forme de réalisation adaptée notamment aux dispositifs d'égouttage de géométrie carrée, mais aussi circulaire ou hexagonale, les protubérances latérales externes comprennent une première protubérance latérale externe et une deuxième protubérance latérale externe opposées.

Selon une autre forme de réalisation adaptée notamment aux dispositifs d'égouttage de géométrie rectangulaire, mais aussi elliptique ou hexagonale, une moitié de l'ouverture supérieure du récipient extérieur comporte un premier organe de support et un deuxième organe de support encadrant un premier renfoncement latéral, l'autre moitié de l'ouverture supérieure du récipient extérieur comportant un deuxième renfoncement latéral et un troisième renfoncement latéral encadrant un troisième organe de support.

Avantageusement encore, pour faciliter l'extraction du réceptacle intérieur perforé, le réceptacle intérieur perforé comporte au moins un organe de préhension.

Avantageusement alors, ledit au moins un organe de préhension est issu d'une bordure supérieure du réceptacle intérieur perforé. Cette disposition permet de maximiser la capacité du réceptacle intérieur perforé en limitant l'encombrement du récipient extérieur.

Selon une forme de réalisation avantageuse, le réceptacle intérieur perforé comporte deux organes de préhension internes opposés. L'utilisateur peut ainsi retirer un réceptacle intérieur perforé de capacité individuelle en soulevant lesdits organes de préhension internes opposés en croisant le pouce et l'index.

Avantageusement alors, les deux organes de préhension internes opposés sont agencés entre deux protubérances latérales externes. Cette disposition permet d'éviter que la déformation de la partie supérieure du réceptacle intérieur perforé n'écarte les protubérances latérales externes des organes de support.

Avantageusement encore, le récipient extérieur loge entièrement le réceptacle intérieur perforé occupant la position basse. Le récipient extérieur peut ainsi être aisément obturé par un couvercle.

L'invention sera mieux comprise à l'étude de quatre exemples de réalisation, pris à titre nullement limitatif, illustrés dans les figures annexées, dans lesquelles :
- la figure 1 est une vue en perspective éclatée d'un premier exemple de réalisation d'un dispositif d'égouttage selon l'invention,
- la figure 2 est une vue en perspective assemblée du dispositif d'égouttage illustré sur la figure 1, dans laquelle le réceptacle intérieur perforé occupe la position basse,
- la figure 3 est une vue en perspective assemblée du dispositif d'égouttage illustré sur la figure 1, dans laquelle le réceptacle intérieur perforé occupe la position haute,
- la figure 4 est une vue en perspective éclatée d'un deuxième exemple de réalisation d'un dispositif d'égouttage selon l'invention,
- la figure 5 est une vue en perspective assemblée du dispositif d'égouttage illustré sur la figure 4, dans laquelle le réceptacle intérieur perforé occupe la position haute,
- la figure 6 est une vue en perspective assemblée du dispositif d'égouttage illustré sur la figure 4, dans laquelle le réceptacle intérieur perforé occupe la position basse,
- la figure 7 est une vue schématique en perspective éclatée d'un troisième exemple de réalisation d'un dispositif d'égouttage selon l'invention,
- la figure 8 est une vue schématique du dispositif d'égouttage illustré sur la figure 7, dans laquelle le réceptacle intérieur perforé occupe la position basse.
- la figure 9 est une vue schématique du dispositif d'égouttage illustré sur la figure 7, dans laquelle le réceptacle intérieur perforé occupe la position haute,
- la figure 10 est une vue en perspective éclatée d'un quatrième exemple de réalisation d'un dispositif d'égouttage selon l'invention,
- la figure 11 est une vue de dessous du réceptacle intérieur perforé du dispositif d'égouttage illustré sur la figure 10,
- la figure 12 est une vue de dessus du récipient extérieur du dispositif d'égouttage illustré sur la figure 10,
- la figure 13 est une vue en perspective assemblée et en coupe partielle du dispositif d'égouttage illustré sur la figure 10, dans laquelle le réceptacle intérieur perforé occupe la position haute,
- la figure 14 est une vue en perspective assemblée et en coupe partielle du dispositif d'égouttage illustré sur la figure 10, dans laquelle le réceptacle intérieur perforé occupe la position basse.

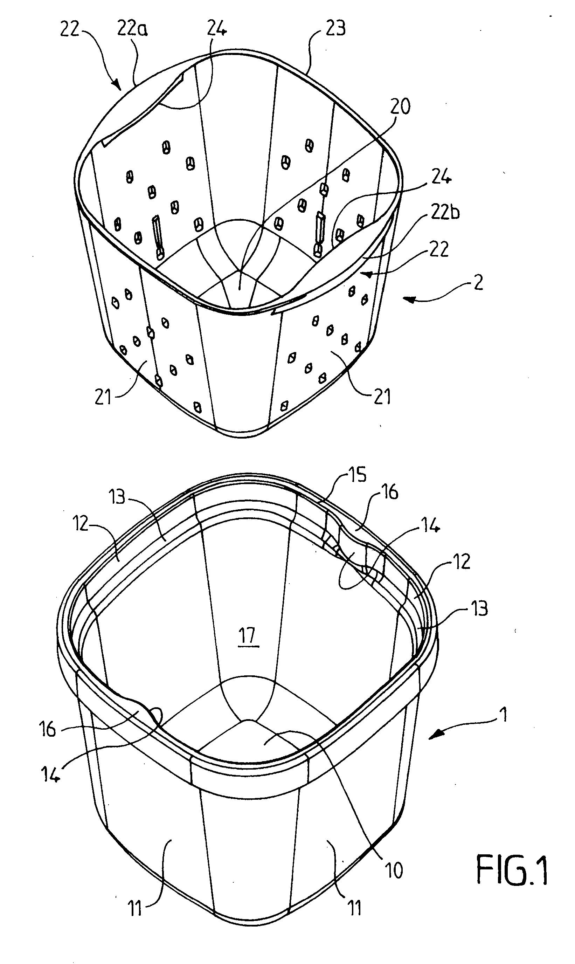

Le dispositif d'égouttage illustré sur les figures 1 à 3 comporte un récipient extérieur 1 recevant un réceptacle intérieur perforé 2, prévus par exemple pour la confection de portions individuelles de fromage blanc.

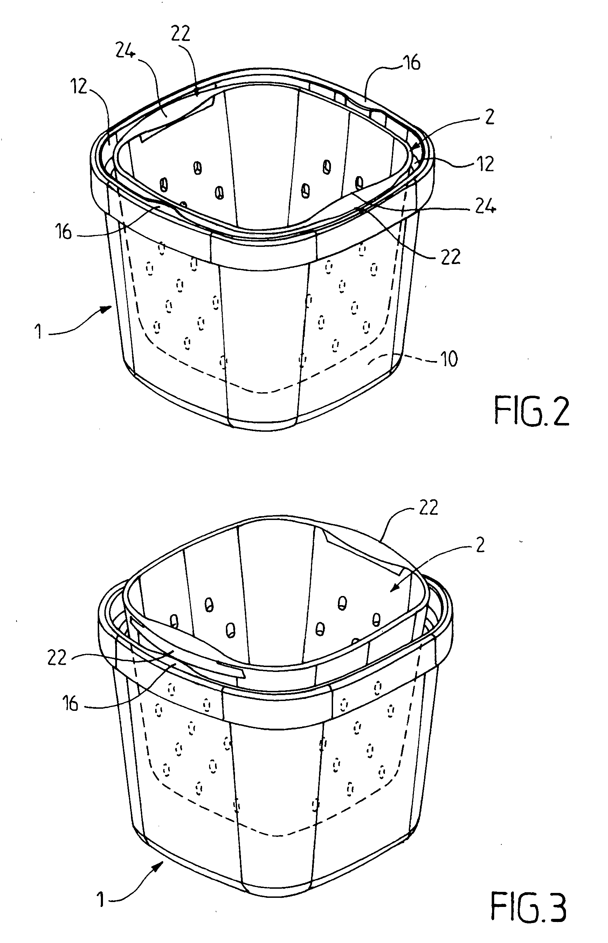

Le récipient extérieur 1 peut supporter le réceptacle intérieur perforé 2 dans une position basse illustrée sur la figure 2 et dans une position haute illustrée sur la figure 3, prévue pour l'égouttage.

Le récipient extérieur 1 et le réceptacle intérieur perforé 2 illustrés sur les figures 1 à 3 présentent une géométrie non circulaire, toutefois la présente invention s'applique également à des récipients extérieurs 1 et/ou des réceptacles intérieurs perforés de géométrie circulaire. Le récipient extérieur 1 et le réceptacle intérieur perforé 2 présentent une géométrie polygonale, plus particulièrement une géométrie carrée.

Le récipient extérieur 1 comporte un fond 10 raccordé à des parois latérales 11. La partie supérieure des parois latérales 11 présente deux renfoncements latéraux 12 agencés au-dessus de rebords supérieurs 13. Deux protubérances latérales internes 14 sont agencées entre les renfoncements latéraux 12. Les protubérances latérales internes 14 sont issues d'un bord supérieur 15 du récipient extérieur 1.

Le réceptacle intérieur perforé 2 comporte un fond imperforé 20 raccordé à des parois latérales perforées 21. Le réceptacle intérieur perforé 2 présente deux protubérances latérales externes 22. Plus particulièrement, les protubérances latérales externes 22 sont issues d'une bordure supérieure 23 du réceptacle intérieur perforé 2. Les protubérances latérales externes 22 comprennent une première protubérance latérale externe 22a et une deuxième protubérance latérale externe 22b opposées, agencées chacune sur une face du réceptacle intérieur perforé 2.

Le réceptacle intérieur perforé 2 comporte avantageusement au moins un organe de préhension 24, cet organe de préhension 24 étant de préférence issu de la bordure supérieure 23 du réceptacle intérieur perforé 2. Tel que représenté sur la figure 1, le réceptacle intérieur perforé 2 comporte deux organes de préhension 24 internes opposés. Les deux organes de préhension 24 internes opposés sont agencés entre les deux protubérances latérales externes 22.

Tel que représenté sur la figure 2, les renfoncements latéraux 12 sont prévus pour loger les protubérances latérales externes 22 lorsque le réceptacle intérieur perforé 2 occupe la position basse dans le récipient extérieur 1. Plus particulièrement, le réceptacle intérieur perforé 2 occupant la position basse repose sur le fond 10 du récipient extérieur 1. Pour minimiser l'espace entre le récipient extérieur 1 et le réceptacle intérieur perforé 2, les parois latérales 11, 21 du récipient extérieur 1 et du réceptacle intérieur perforé 2 présentent des formes trapezoïdales. La figure 2 montre que le récipient extérieur 1 loge entièrement le réceptacle intérieur perforé 2 occupant la position basse.

Tel que visible sur la figure 3, les protubérances latérales externes 22 sont susceptibles de reposer sur des organes de support 16 du récipient extérieur 1 lorsque le réceptacle intérieur perforé 2 occupe la position haute. Tel que mieux visible sur la figure 1, les organes de support 16 du récipient extérieur 1 sont formés par les protubérances latérales internes 14. Ainsi le récipient extérieur 1 présente une ouverture supérieure 17 ménageant à l'intérieur dudit récipient extérieur 1 au moins deux renfoncements latéraux 12 entre les organes de support 16.

Le dispositif d'égouttage selon l'invention illustré sur les figures 1 à 3 s'utilise de la manière suivante. Pour passer de la position basse du réceptacle intérieur perforé 2 illustrée sur la figure 2 à la position haute du réceptacle intérieur perforé 2 illustrée sur la figure 3, ou vice-versa, l'utilisateur saisit le réceptacle intérieur perforé 2 par les organes de préhension 24, par exemple en croisant le pouce et l'index, soulève le réceptacle intérieur perforé 2, tourne le réceptacle intérieur perforé 2 d'un quart de tour par rapport au récipient extérieur 1, et repose le réceptacle intérieur perforé 2.

La manipulation du réceptacle intérieur perforé 2 est ainsi particulièrement aisée.

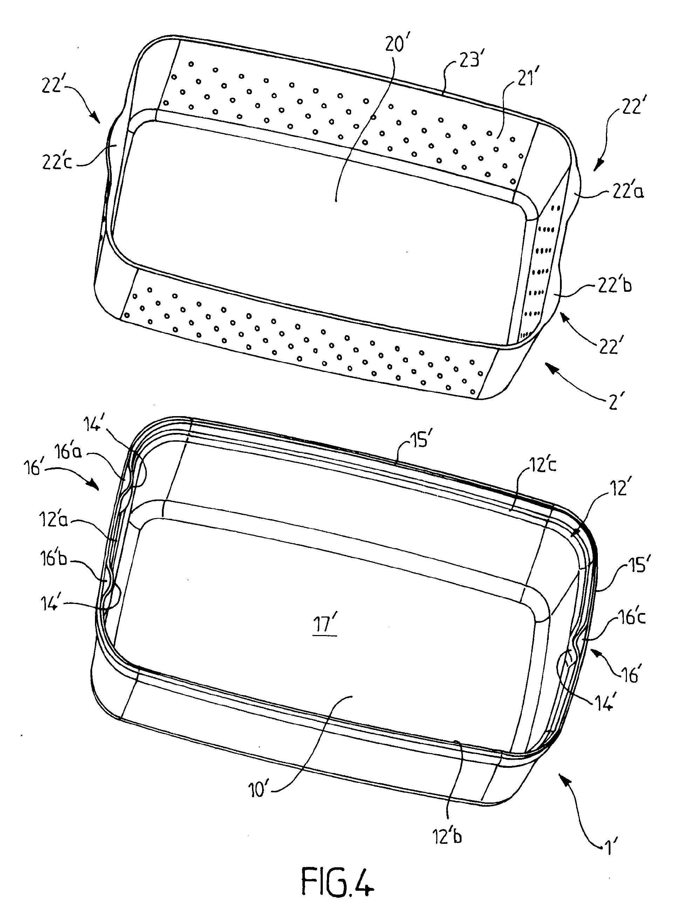

Le dispositif d'égouttage illustré sur les figures 4 à 6 comporte un récipient extérieur 1' recevant un réceptacle intérieur perforé 2', prévus par exemple pour la confection de portions familiales de fromage blanc.

Les organes de support 16' du récipient extérieur 1' sont formés par des protubérances latérales internes 14' issues du bord supérieur 15' du récipient extérieur 1'. Le réceptacle intérieur perforé 2' comporte un fond imperforé 20' et des parois latérales perforées 21'. Le réceptacle intérieur perforé 2' occupant la position basse repose sur un fond 10' du récipient extérieur 1' ; le récipient extérieur 1' loge entièrement le réceptacle intérieur perforé 2' occupant la position basse.

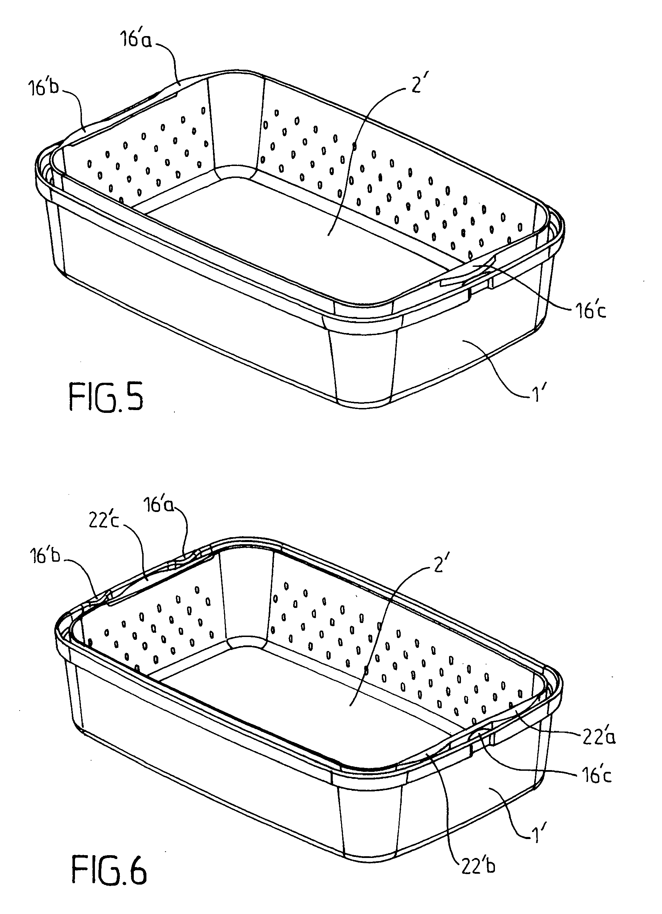

Le dispositif d'égouttage illustré sur les figures 4 à 6 diffère du dispositif d'égouttage illustré sur les figures 1 à 3 en ce que le récipient extérieur 1' et le réceptacle intérieur perforé 2' présentent une géométrie rectangulaire, et en ce qu'une moitié de l'ouverture supérieure 17' du récipient extérieur 1' comporte un premier organe de support 16'a et un deuxième organe de support 16'b encadrant un premier renfoncement latéral 12'a, et en ce que l'autre moitié de l'ouverture supérieure 17' du récipient extérieur 1' comporte un deuxième renfoncement latéral 12'b et un troisième renfoncement latéral 12'c encadrant un troisième organe de support 16'c. Le réceptacle intérieur perforé 2' présente trois protubérances latérales externes 22' susceptibles de reposer sur les organes de support 16' du récipient extérieur 1' lorsque le réceptacle intérieur perforé 2' occupe la position haute. Les protubérances latérales externes 22' sont issues d'une bordure supérieure 23' du réceptacle intérieur perforé 2'. Les protubérances latérales externes 22' comprennent une première protubérance latérale externe 22'a et une deuxième protubérance latérale externe 22'b agencées sur un même côté du réceptacle intérieur perforé 2', prévues pour reposer respectivement sur le premier organe de support 16'a et le deuxième organe de support 16'b, ainsi qu'une troisième protubérance latérale externe 22'c, agencée sur le côté opposé du réceptacle intérieur perforé 2' et prévue pour reposer sur le troisième organe de support 16'c, tel que visible sur la figure 5.

Pour passer de la position haute du réceptacle intérieur perforé 2' illustrée sur la figure 5 à la position basse du réceptacle intérieur perforé 2' illustrée sur la figure 6, l'utilisateur soulève le réceptacle intérieur perforé 2', le tourne d'un demi-tour par rapport au récipient externe 1', et repose le réceptacle intérieur perforé 2'. Ainsi le troisième organe de support 16'c est inséré entre la première protubérance latérale externe 22'a et la deuxième protubérance latérale externe 22'b, la troisième protubérance latérale externe 22'c étant insérée entre le premier organe de support 16'a et le deuxième organe de support 16'b, tel que visible sur la figure 6. Les protubérances latérales externes 22' formées par la première protubérance latérale externe 22'a, la deuxième protubérance latérale externe 22'b et la troisième protubérance latérale externe 22'c sont ainsi insérées dans des renfoncements latéraux 12' formés par le premier renfoncement latéral 12'a, le deuxième renfoncement latéral 12'b et le troisième renfoncement latéral 12'c.

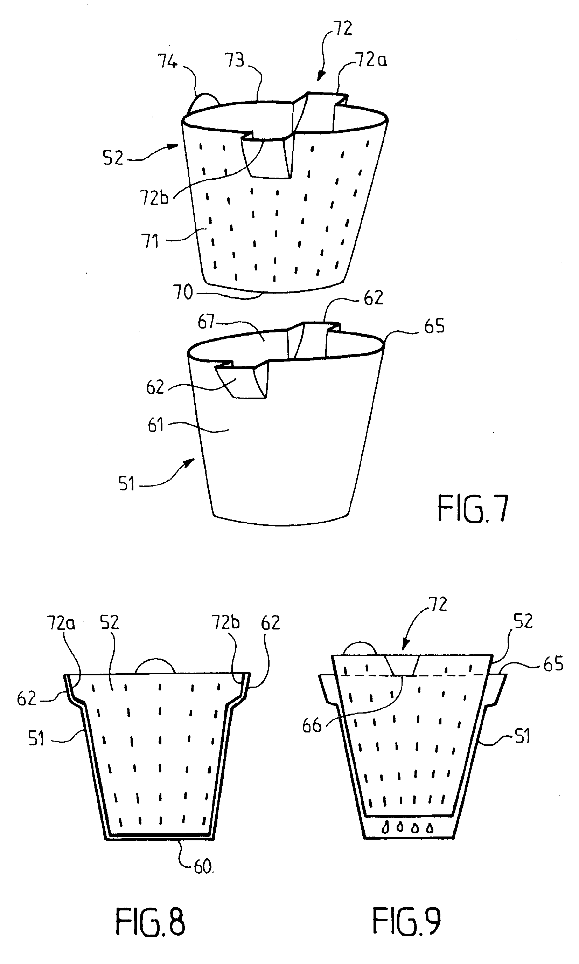

Le dispositif d'égouttage illustré sur les figures 7 à 9 comporte un récipient extérieur 51 recevant un réceptacle intérieur perforé 52, prévus par exemple pour la confection de portions individuelles de fromage blanc.

Le récipient extérieur 51 et le réceptacle intérieur perforé 52 présentent une géométrie essentiellement circulaire. Le réceptacle intérieur perforé 52 comporte un fond imperforé 70 et une paroi latérale perforée 71, ainsi qu'un organe de préhension 74 issu d'une bordure supérieure 73. Le réceptacle intérieur perforé 52 occupant la position basse repose sur un fond 60 du récipient extérieur 51. Les protubérances latérales externes 72 du réceptacle intérieur perforé 52 comprennent une première protubérance latérale externe 72a et une deuxième protubérance latérale externe 72b opposées.

Le dispositif d'égouttage illustré sur les figures 7 à 9 diffère du dispositif d'égouttage illustré sur les figures 1 à 3 en ce que les renfoncements latéraux 62 du récipient extérieur 51 sont formés par des décrochements extérieurs de la paroi latérale 61 s'écartant vers l'extérieur de la géométrie du reste du bord supérieur 65 du récipient extérieur 51, et en ce que les protubérances latérales externes 72 sont formés par des décrochements extérieurs de la paroi latérale perforée 71 s'écartant vers l'extérieur de la géométrie du reste de la bordure supérieure 73. Les organes de support 66 du récipient extérieur 51 sont formés par le bord supérieur 65 du récipient extérieur 51.

Tel que visible sur la figure 8, les renfoncements latéraux 62 logent partiellement les protubérances latérales externes 72 lorsque le réceptacle intérieur perforé 52 occupe la position basse.

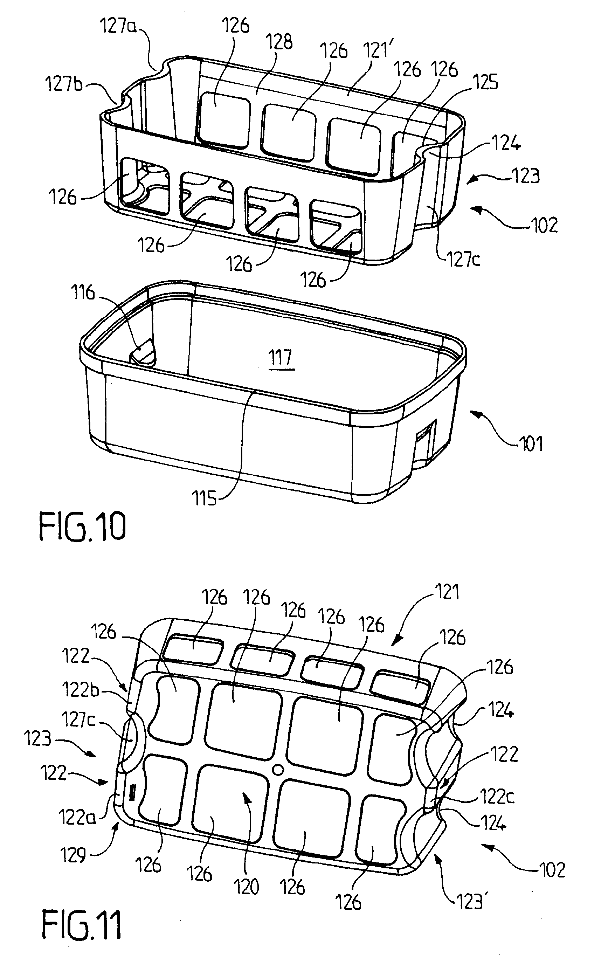

Le dispositif d'égouttage illustré sur les figures 10 à 14 comporte un récipient extérieur 101 recevant un réceptacle intérieur perforé 102, prévus par exemple pour la confection de portions familiales de yaourt. Le récipient extérieur 101 et le réceptacle intérieur perforé 102 présentent une géométrie de configuration rectangulaire.

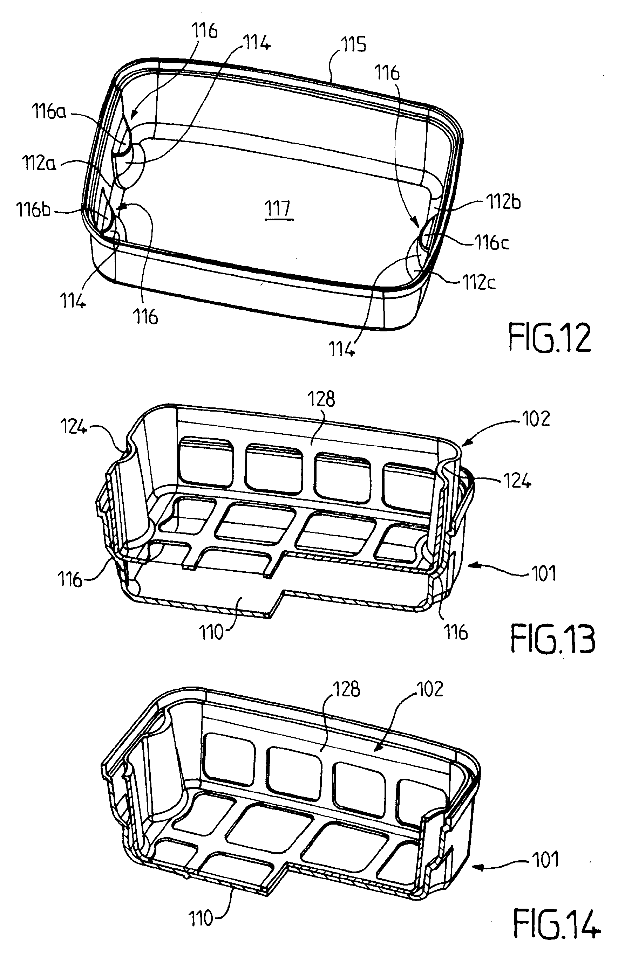

Le réceptacle intérieur perforé 102 présente trois protubérances latérales externes 122, mieux visibles sur la figure 11, susceptibles de reposer sur les organes de support 116 du récipient extérieur 101, mieux visibles sur la figure 12, lorsque le réceptacle intérieur perforé 102 occupe la position haute.

Une moitié de l'ouverture supérieure 117 du récipient extérieur 101 comporte un premier organe de support 116a et un deuxième organe de support 116b encadrant un premier renfoncement latéral 112a, et l'autre moitié de l'ouverture supérieure 117 du récipient extérieur 101 comporte un deuxième renfoncement latéral 112b et un troisième renfoncement latéral 112c encadrant un troisième organe de support 116c.

Le réceptacle intérieur perforé 102 comporte des organes de préhension 124 issus d'une bordure supérieure 125 du réceptacle intérieur perforé 102.

Tel que visible sur la figure 14, le réceptacle intérieur perforé 102 occupant la position basse repose sur un fond 110 du récipient extérieur 101 ; le récipient extérieur 101 loge entièrement le réceptacle intérieur perforé 102 occupant la position basse.

Ce dispositif d'égouttage diffère du deuxième exemple de réalisation en ce que les organes de support 116 du récipient extérieur 101 sont formés par des protubérances latérales internes 114 s'arrêtant à distance du bord supérieur 115 du récipient extérieur 101.

Le réceptacle intérieur perforé 102 comporte un fond perforé 120, deux parois latérales perforées 121, 121' et deux parois latérales imperforées 123, 123'.

Le fond perforé 120 et les parois latérales perforées 121, 121' ménagent des fenêtres d'égouttage 126. Une paroi filtrante 128 s'étend au travers de chacune des fenêtres d'égouttage 126. Le réceptacle intérieur perforé est par exemple obtenu par surmoulage d'un corps en matière plastique sur la paroi filtrante 128. La paroi filtrante 128 ménage avantageusement des passages inférieurs à 500 µm et de préférence compris entre 50 µm et 200 µm pour l'égouttage du yaourt ; pour l'égouttage du fromage blanc des passages de taille plus importante, par exemple jusqu'à 2 mm, peuvent être envisagés. La paroi filtrante 128 est avantageusement réalisée en matériau tissé, par exemple en nylon. Si désiré, une même paroi filtrante 128 peut s'étendre au travers d'une ou plusieurs fenêtres d'égouttage 126. Le réceptacle intérieur perforé 102 peut présenter une ou plusieurs fenêtres d'égouttage 126.

Les protubérances latérales externes 122 du réceptacle intérieur perforé 102 sont formées par des portions de bordure inférieure 129 du réceptacle intérieur perforé 102.

Tel que mieux visible sur la figure 11, les protubérances latérales externes 122 comprennent deux protubérances latérales externes 122a, 122b issues de la paroi latérale imperforée 123, une autre protubérance latérale externe 122c étant issue de l'autre paroi latérale imperforée 123' opposée à la paroi latérale imperforée 123.

Une encoche latérale 127c s'élève sur la paroi latérale imperforée 123 entre les protubérances latérales externes 122a, 122b. L'autre protubérance latérale externe 122c est encadrée par deux autres encoches latérales 127a, 127b. Les organes de préhension 124 sont agencés à l'extérieur du réceptacle intérieur perforé 102 au-dessus des encoches latérales 127a, 127b, 127c.

Pour passer de la position haute du réceptacle intérieur perforé 102 illustrée sur la figure 13 à la position basse illustrée sur la figure 14, l'utilisateur soulève le réceptacle intérieur perforé 102, le tourne d'un demi-tour par rapport au récipient externe 101, et repose le réceptacle intérieur perforé 102 dans le récipient externe 101.

Dans la position basse du réceptacle intérieur perforé 102 illustrée sur la figure 14, la minimisation de l'espace entre les parois extérieures du réceptacle intérieur perforé 102 et les parois intérieures du récipient extérieur 101 permet de minimiser la quantité de lait et de ferments se trouvant hors du réceptacle intérieur perforé 102.

Ainsi, selon l'invention, le réceptacle intérieur perforé 2 ; 2' ; 52 ; 102 présente au moins deux protubérances latérales externes 22 ; 22' ; 72 ; 122 susceptibles de reposer sur des organes de support 16 ; 16' ; 66 ; 116 du récipient extérieur 1 ; 1' ; 51 ; 101 lorsque le réceptacle intérieur perforé 2 ; 2' ; 52 ; 102 occupe la position haute, et le récipient extérieur 1 ; 1' ; 51 ; 101 présente une ouverture supérieure 17 ; 17' ; 67 ; 117 ménageant à l'intérieur dudit récipient extérieur 1 ; 1' ; 51 ; 101 au moins deux renfoncements latéraux 12 ; 12' ; 62 ; 112 entre lesdits organes de support 16 ; 16' ; 66 ; 116, lesdits renfoncements latéraux 12 ; 12' ; 62 ; 112 étant prévus pour loger au moins partiellement lesdites protubérances latérales externes 22 ; 22' ; 72 ; 122 lorsque le réceptacle intérieur perforé 2 ; 2' ; 52 ; 102 occupe la position basse.

Le réceptacle intérieur perforé 2 ; 2' ; 52 forme ainsi une faisselle permettant l'égouttage du fromage blanc par une manipulation simple consistant à soulever le réceptacle intérieur perforé 2 ; 2' ; 52, à le tourner d'une portion de tour, et à le reposer dans le récipient extérieur 1 ; 1' ; 51. Le réceptacle intérieur perforé 102 et le récipient extérieur 101 permettent une manipulation similaire pour l'égouttage du yaourt ou du fromage blanc.

Les renfoncements latéraux 12 ; 12' ; 62 ; 112 ménagés dans le récipient extérieur 1 ; 1' ; 51 ; 101 par l'ouverture supérieure 17 ; 17' ; 67 ; 117 permettent de déplacer les protubérances latérales externes 22 ; 22' ; 72 ; 122 hors des renfoncements latéraux 12 ; 12' ; 62 ; 112.

Le réceptacle intérieur perforé 2 ; 2' ; 52 ; 102 initialement en position basse dans le récipient extérieur 1 ; 1' ; 51 ; 101 peut ainsi être retiré du récipient extérieur 1 ; 1' ; 51 ; 101 sans nécessiter de déformation du réceptacle intérieur perforé 2 ; 2' ; 52 ; 102 ou du récipient extérieur 1 ; 1' ; 51 ; 101.

Le réceptacle intérieur perforé 2 ; 2' ; 52 ; 102 peut aussi être remis en place en position basse dans le récipient extérieur 1 ; 1' ; 51 ; 101 sans nécessiter de déformation du réceptacle intérieur perforé 2 ; 2' ; 52 ; 102 ou du récipient extérieur 1 ; 1' ; 51 ; 101.

En d'autres termes, les renfoncements latéraux 12 ; 12' ; 62 ; 112 ménagent un passage pour les protubérances latérales externes 22 ; 22' ; 72 ; 122 lorsque le réceptacle intérieur perforé 2 ; 2' ; 52 ; 102 est déplacé de la position basse dans le récipient extérieur 1 ; 1' ; 51 ; 101 vers l'extérieur, et vice-versa.

Le réceptacle intérieur perforé 2 ; 2' ; 52 ; 102 peut être mis en place en position basse dans le récipient extérieur 1 ; 1' ; 51 ; 101 en insérant les renfoncements latéraux 12 ; 12' ; 62 ; 112 dans les protubérances latérales externes 22 ; 22' ; 72 ; 122.

Le réceptacle intérieur perforé 2 ; 2' ; 52 ; 102 peut être mis en place en position haute dans le récipient extérieur 1 ; 1' ; 51 ; 101 en plaçant les protubérances latérales externes 22 ; 22' ; 72 ; 122 sur les organes de support 16; 16' ; 66; 116.

Dans le premier, le deuxième et le troisième exemples de réalisation, les renfoncements latéraux 12 ; 12' ; 62 sont ménagés à l'intérieur du récipient extérieur 1 ; 1' ; 51 au niveau du bord supérieur 15 ; 15' ; 65 du récipient extérieur 1 ; 1' ; 51.

Dans le quatrième exemple de réalisation, les renfoncements latéraux 112 sont ménagés à l'intérieur du récipient extérieur 101 en dessous du bord supérieur 115 du récipient extérieur 101.

A titre de variante pour le quatrième exemple de réalisation, la ou les parois filtrantes 128 ne sont pas nécessairement réalisées en matériau tissé, mais peuvent par exemple être réalisées en matériau non tissé, ou encore en métal perforé obtenu par électroérosion. La géométrie des passages ménagés par la ou les parois filtrantes 128 n'est pas nécessairement circulaire ou carrée.

Une ou des parois filtrantes 128 présentant des passages allongés peuvent être utilisées. Le paramètre dimensionnel pertinent pour la filtration est la largeur des passages, la longueur pouvant être plus importante sans affecter les performances de filtration.

A titre de variante, les protubérances latérales externes et les organes de support ne sont pas nécessairement agencés de manière symétrique ; la rotation du réceptacle intérieur perforé par rapport au récipient extérieur pour passer de la position basse à la position haute, ou vice-versa, n'est pas nécessairement d'un quart de tour ou d'un demi-tour.

La présente invention n'est nullement limitée à l'exemple de réalisation décrit et à ses variantes, mais englobe de nombreuses modifications dans le cadre des revendications.

## Revendications

1. Dispositif d'égouttage, comportant un récipient extérieur (1 ; 1' ; 51 ; 101) recevant un réceptacle intérieur perforé (2 ; 2' ; 52 ; 102), le récipient extérieur (1 ; 1' ; 51 ; 101) pouvant supporter le réceptacle intérieur perforé (2 ; 2' ; 52 ; 102) dans une position basse et dans une position haute, le réceptacle intérieur perforé (2 ; 2' ; 52 ; 102) présentant au moins deux protubérances latérales externes (22 ; 22' ; 72 ; 122) susceptibles de reposer sur des organes de support (16 ; 16' ; 66 ; 116) du récipient extérieur (1 ; 1' ; 51 ; 101) lorsque le réceptacle intérieur perforé (2 ; 2' ; 52 ; 102) occupe la position haute, le récipient extérieur (1 ; 1' ; 51 ; 101) présentant une ouverture supérieure (17 ; 17' ; 67 ; 117), des renfoncements latéraux (12 ; 12' ; 62 ; 112) étant prévus pour loger au moins partiellement lesdites protubérances latérales externes (22 ; 22' ; 72 ; 122) lorsque le réceptacle intérieur perforé (2 ; 2' ; 52 ; 102) occupe la position basse, l'ouverture supérieure (17 ; 17' ; 67 ; 117) ménageant à l'intérieur dudit récipient extérieur (1 ; 1' ; 51 ; 101) au moins deux renfoncements latéraux (12 ; 12' ; 62 ; 112) entre lesdits organes de support (16 ; 16' ; 66 ; 116), et **caractérisé en ce que** les renfoncements latéraux (12 ; 12' ; 62 ; 112) ménagent un passage pour les protubérances latérales externes (22 ; 22' ; 72 ; 122) lorsque le réceptacle intérieur perforé (2 ; 2' ; 52 ; 102) est déplacé de la position basse dans le récipient extérieur (1 ; 1' ; 51 ; 101) vers l'extérieur, et vice-versa.

2. Dispositif d'égouttage selon la revendication 1, **caractérisé en ce que** le réceptacle intérieur perforé (2 ; 2' ; 52 ; 102) occupant la position basse repose sur un fond (10 ; 10' ; 60 ; 110) du récipient extérieur (1 ; 1' ; 51 ; 101).

3. Dispositif d'égouttage selon l'une des revendications 1 ou 2, **caractérisé en ce que** les organes de support (16 ; 16' ; 116) du récipient extérieur (1 ; 1' ; 101) sont formés par des protubérances latérales internes (14 ; 14' ; 114).

4. Dispositif d'égouttage selon la revendication 3, **caractérisé en ce que** les protubérances latérales internes (14 ; 14') sont issues d'un bord supérieur (15 ; 15') du récipient extérieur (1 ; 1').

5. Dispositif d'égouttage selon l'une des revendications 1 ou 2, **caractérisé en ce que** les organes de support (66) du récipient extérieur (51) sont formés par un bord supérieur (65) du récipient extérieur (51).

6. Dispositif d'égouttage selon l'une des revendications 1 à 5, **caractérisé en ce que** le récipient extérieur (1 ; 1' ; 51 ; 101) et le réceptacle intérieur perforé (2 ; 2' ; 52 ; 102) présentent une géométrie non circulaire.

7. Dispositif d'égouttage selon la revendication 6, **caractérisé en ce que** le récipient extérieur (1 ; 1' ; 51 ; 101) et le réceptacle intérieur perforé (2 ; 2' ; 52 ; 102) présentent une géométrie polygonale.

8. Dispositif d'égouttage selon l'une des revendications 1 à 7, **caractérisé en ce que** le réceptacle intérieur perforé (2 ; 2' ; 52 ; 102) comporte une ou des parois latérales perforées (21 ; 21' ; 71 ; 121, 121').

9. Dispositif d'égouttage selon l'une des revendications 1 à 8, **caractérisé en ce que** les protubérances latérales externes (22 ; 72) comprennent une première protubérance latérale externe (22a ; 72a) et une deuxième protubérance latérale externe (22b ; 72b) opposées.

10. Dispositif d'égouttage selon l'une des revendications 1 à 8, **caractérisé en ce qu'**une moitié de l'ouverture supérieure (17' ; 117) du récipient extérieur (1' ; 101) comporte un premier organe de support (16'a ; 116a) et un deuxième organe de support (16'b ; 116b) encadrant un premier renfoncement latéral (12'a ; 112a) et **en ce que** l'autre moitié de l'ouverture supérieure (17' ; 117) du récipient extérieur (1' ; 101) comporte un deuxième renfoncement latéral (12'b ; 112b) et un troisième renfoncement latéral (12'c ; 112c) encadrant un troisième organe de support (16'c ; 116c).

11. Dispositif d'égouttage selon l'une des revendications 1 à 10, **caractérisé en ce que** le réceptacle intérieur perforé (2 ; 52 ; 102) comporte au moins un organe de préhension (24 ; 74 ; 124).

12. Dispositif d'égouttage selon la revendication 11, **caractérisé en ce que** ledit au moins un organe de préhension (24 ; 74 ; 124) est issu d'une bordure supérieure (23 ; 73 ; 125) du réceptacle intérieur perforé (2 ; 52 ; 102).

13. Dispositif d'égouttage selon l'une des revendications 11 ou 12, **caractérisé en ce que** le réceptacle intérieur perforé (2) comporte deux organes de préhension (24) internes opposés.

14. Dispositif d'égouttage selon la revendication 13, **caractérisé en ce que** les deux organes de préhension (24) internes opposés sont agencés entre deux protubérances latérales externes (22).

15. Dispositif d'égouttage selon l'une des revendications 1 à 14, **caractérisé en ce que** le récipient extérieur (1 ; 1' ; 101) logé entièrement le réceptacle intérieur perforé (2 ; 2' ; 102) occupant la position basse.

## Patentansprüche

1. Abtropfvorrichtung mit einem Außenbehälter (1; 1'; 51; 101), in den ein perforiertes Innengefäß (2; 2'; 52; 102) eingesetzt wird, wobei der Außenbehälter (1; 1'; 51; 101) das perforierte Innengefäß (2; 2'; 52; 102) in einer unteren und einer oberen Position aufnehmen kann und das perforierte Innengefäß (2; 2'; 52; 102) mindestens zwei äußere seitliche Vorsprünge (22; 22'; 72; 122) aufweist, die auf Stützelementen (16; 16'; 66; 116) des Außenbehälters (1; 1'; 51; 101) aufliegen können, wenn sich das perforierte Innengefäß (2; 2'; 52; 102) in der oberen Position befindet, wobei der Außenbehälter (1; 1'; 51; 101) eine obere Öffnung (17; 17'; 67; 117) und seitliche Vertiefungen (12; 12'; 62; 112) aufweist, die dazu bestimmt sind, die genannten äußeren seitlichen Vorsprünge (22; 22'; 72; 122) mindestens teilweise aufzunehmen, wenn sich das perforierte Innengefäß (2; 2'; 52; 102) in der unteren Position befindet, und wobei in der oberen Öffnung (17; 17'; 67; 117) im Inneren des genannten Außenbehälters (1; 1'; 51; 101) mindestens zwei seitliche Vertiefungen (12; 12'; 62; 112) zwischen den genannten Stützelementen (16; 16'; 66; 116) ausgebildet sind, und **dadurch gekennzeichnet, dass** die seitlichen Vertiefungen (12; 12'; 62; 112) einen Durchgang für die äußeren seitlichen Vorsprünge (22; 22'; 72; 122) bilden, wenn das perforierte Innengefäß (2; 2'; 52; 102) aus der unteren Position des Außenbehälters (1; 1'; 51; 101) herausgehoben wird und umgekehrt.

2. Abtropfvorrichtung nach Anspruch 1, **dadurch gekennzeichnet, dass** das perforierte Innengefäß (2; 2'; 52; 102) in der unteren Position auf einem Boden (10; 10'; 60; 110) des Außenbehälters (1; 1 '; 51; 101) aufliegt.

3. Abtropfvorrichtung nach einem der Ansprüche 1 oder 2, **dadurch gekennzeichnet, dass** die Stützelemente (16; 16'; 116) des Außenbehälters (1; 1'; 101) durch innenliegende seitliche Vorsprünge (14; 14'; 114) gebildet werden.

4. Abtropfvorrichtung nach Anspruch 3, **dadurch gekennzeichnet, dass** die innenliegenden seitlichen Vorsprünge (14; 14') aus einem oberen Rand (15; 15') des Außenbehälters (1; 1') hervorgehen.

5. Abtropfvorrichtung nach einem der Ansprüche 1 oder 2, **dadurch gekennzeichnet, dass** die Stützelemente (66) des Außenbehälters (51) durch einen oberen Rand (65) des Außenbehälters (51) gebildet werden.

6. Abtropfvorrichtung nach einem der Ansprüche 1 bis 5, **dadurch gekennzeichnet, dass** der Außenbehälter (1; 1'; 51; 101) und das perforierte Innengefäß (2; 2'; 52; 102) eine nicht kreisförmige Geometrie darstellen.

7. Abtropfvorrichtung nach Anspruch 6, **dadurch gekennzeichnet, dass** der Außenbehälter (1; 1'; 51; 101) und das perforierte Innengefäß (2; 2'; 52; 102) eine polygonale Geometrie darstellen.

8. Abtropfvorrichtung nach einem der Ansprüche 1 bis 7, **dadurch gekennzeichnet, dass** das perforierte Innengefäß (2; 2'; 52; 102) eine oder mehrere perforierte Seitenwände (21; 21'; 71; 121; 121') aufweist.

9. Abtropfvorrichtung nach einem der Ansprüche 1 bis 8, **dadurch gekennzeichnet, dass** die äußeren seitlichen Vorsprünge (22; 72) einen ersten äußeren seitlichen Vorsprung (22a; 72a) und einen zweiten äußeren seitlichen Vorsprung (22b; 72b) umfassen, die sich gegenüber liegen.

10. Abtropfvorrichtung nach einem der Ansprüche 1 bis 8, **dadurch gekennzeichnet, dass** eine Seite der oberen Öffnung (17'; 117) des Außenbehälters (1'; 101) ein erstes Stützelement (16'a; 116a) und ein zweites Stützelement (16'b; 116b) aufweist, die eine erste seitliche Vertiefung (12'a; 112a) umrahmen, und dass die andere Seite der oberen Öffnung (17'; 117) des Außenbehälters (1'; 101) eine zweite seitliche Vertiefung (12'b; 112b) und eine dritte seitliche Vertiefung(12'c; 112c) umfasst, die ein drittes Stützelement (16'c; 116c) umrahmen.

11. Abtropfvorrichtung nach einem der Ansprüche 1 bis 10, **dadurch gekennzeichnet, dass** das perforierte Innengefäß (2; 52; 102) mindestens ein Greifelement (24; 74; 124) aufweist.

12. Abtropfvorrichtung nach Anspruch 11, **dadurch gekennzeichnet, dass** das genannte mindestens einmal vorhandene Greifelement (24; 74; 124) aus einem oberen Rand (23; 73; 125) des perforierten Innengefäßes (2; 52; 102) hervorgeht.

13. Abtropfvorrichtung nach einem der Ansprüche 11 oder 12, **dadurch gekennzeichnet, dass** das perforierte Innengefäß (2) zwei sich gegenüberliegende, innenliegende Greifelemente (24) aufweist.

14. Abtropfvorrichtung nach Anspruch 13, **dadurch gekennzeichnet, dass** die zwei sich gegenüberliegenden, innenliegenden Greifelemente (24) zwischen zwei äußeren seitlichen Vorsprüngen (22) angeordnet sind.

15. Abtropfvorrichtung nach einem der Ansprüche 1 bis 14, **dadurch gekennzeichnet, dass** der Außenbehälter (1; 1'; 101) das perforierte Innengefäß (2; 2'; 102) in der unteren Position vollständig aufnimmt.

## Claims

1. Draining device, comprising an outer recipient (1; 1'; 51; 101) receiving a perforated inner receptacle (2; 2'; 52; 102), the outer recipient (1; 1'; 51; 101) being able to support the perforated inner receptacle (2; 2'; 52; 102) in a low position and in a high position, the perforated inner receptacle (2; 2'; 52; 102) having at least two outer lateral protuberances (22; 22'; 72; 122) likely to rest on support members (16; 16'; 66; 116) of the outer recipient (1; 1'; 51; 101) when the perforated inner receptacle (2; 2'; 52; 102) is in the high position, the outer recipient (1; 1'; 51; 101) having an upper opening (17; 17'; 67; 117), lateral recesses (12; 12'; 62; 112) being planned to house at least partially said outer lateral protuberances (22; 22'; 72; 122) when the perforated inner receptacle (2; 2'; 52; 102) is in the low position, forming the upper opening (17; 17'; 67; 117) inside said outer recipient (1; 1'; 51; 101) at least two lateral recesses (12; 12'; 62; 112) between said support members (16; 16'; 66; 116), and **characterised in that** the lateral recesses (12; 12'; 62; 112) form a passage for the outer lateral protuberances (22; 22'; 72; 122) when the perforated inner receptacle (2; 2'; 52; 102) is moved from the low position in the outer recipient (1; 1'; 51; 101) to the outside, and vice-versa.

2. Draining device according to claim 1, **characterised in that** the perforated inner receptacle (2; 2'; 52; 102) in the low position rests on a base (10; 10'; 60; 110) of the outer recipient (1; 1'; 51; 101).

3. Draining device according to claim 1 or 2, **characterised in that** the support members (16; 16'; 116) of the outer recipient (1; 1'; 101) are formed by inner lateral protuberances (14; 14'; 114).

4. Draining device according to claim 3, **characterised in that** the inner lateral protuberances (14; 14') come from an upper edge (15; 15') of the outer recipient (1; 1').

5. Draining device according to claim 1 or 2, **characterised in that** the support members (66) of the outer recipient (51) are formed by an upper edge (65) of the outer recipient (51).

6. Draining device according to one of claims 1 to 5, **characterised in that** the outer recipient (1; 1'; 51; 101) and the le perforated inner receptacle (2; 2'; 52; 102) have non-circular geometry.

7. Draining device according to claim 6, **characterised in that** the outer recipient (1; 1'; 51; 101) and the perforated inner receptacle (2; 2'; 52; 102) have polygonal geometry.

8. Draining device according to one of claims 1 to 7, **characterised in that** the perforated inner receptacle (2; 2'; 52; 102) has one or more perforated lateral walls (21; 21'; 71; 121, 121').

9. Draining device according to one of claims 1 to 8, **characterised in that** the outer lateral protuberances (22; 72) comprise a first outer lateral protuberance (22a; 72a) and a second outer lateral protuberance (22b; 72b) opposite each other.

10. Draining device according to one of claims 1 to 8, **characterised in that** half of the upper opening (17'; 117) of the outer recipient (1'; 101) comprises a first support member (16'a; 116a) and a second support member (16'b; 116b) surrounding a first lateral recess (12'a; 112a) and **in that** the other half of the upper opening (17'; 117) of the outer recipient (1'; 101) comprises a second lateral recess (12'b; 112b) and a third lateral recess (12'c; 112c) surrounding a third support member (16'c; 116c).

11. Draining device according to one of claims 1 to 10, **characterised in that** the perforated inner receptacle (2; 52; 102) has at least one gripping member (24; 74; 124).

12. Draining device according to claim 11, **characterised in that** said at least one gripping member (24; 74; 124) comes from an upper edge (23; 73; 125) of the perforated inner receptacle (2; 52; 102).

13. Draining device according to claim 11 or 12, **characterised in that** the perforated inner receptacle (2) has two internal gripping members (24) opposite each other.

14. Draining device according to claim 13, **characterised in that** the two internal gripping members (24) opposite each other are arranged between two outer lateral protuberances (22).

15. Draining device according to one of claims 1 to 14, **characterised in that** the outer recipient (1; 1'; 101) houses entirely the perforated inner receptacle (2; 2'; 102) in the low position.
